# EUROPÄISCHE PATENTANMELDUNG

(11) **EP 2 101 068 A2**
(43) Veröffentlichungstag der Anmeldung: **16.09.2009**
(21) Anmeldenummer: 09450054.3
(22) Anmeldetag: 11.03.2009
(51) Int. Cl.: F16B 5/02

(54) **Justiereinheit**

(30) Priorität: 11.03.2008 AT 3862008
(71) Anmelder: Gnaser, Gerald, 8071 Gössendorf (AT)
(72) Erfinder: Gnaser, Gerald, 8071 Gössendorf (AT)
(74) Vertreter: Gibler & Poth Patentanwälte OEG

(57) **Zusammenfassung**

Bei einer Justiereinheit, wird für einen modularen, verwindungssteifen und hoch belastbaren Aufbau vorgeschlagen, dass diese durch zwei eine zweidimensionale Justiereinheit (22) ausbildende und unmittelbar miteinander verbundene Linearjustiereinheiten (1) gebildet ist.

## Beschreibung

Die Erfindung betrifft eine Justiereinheit gemäß dem Oberbegriff des Patentanspruches 1.

Es sind Justiereinheiten bekannt, welche eine Justage in zwei Ebenen unabhängig voneinander zulassen. Derartige Justiereinheiten weisen jedoch den Nachteil auf, dass diese eine Sonderbauform darstellen, und sehr aufwändig ausgebildet sind. Es ist weiters bekannt, Linearjustiereinheiten mittels Adapterkonsolen miteinander zu verbinden. Dies weist den Nachteil auf, dass durch die notwendigen Adapter ein Aufbau entsteht, welcher nicht sehr Verwindungssteif ist, und nicht zur Aufnahme großer Kräfte ausgebildet ist.

Aufgabe der Erfindung ist es daher eine Justiereinheit der eingangs genannten Art anzugeben, mit welcher die genannten Nachteile vermieden werden können, welche einen modularen Aufbau aufweist, sowie welche verwindungssteif und hochbelastbar ist.

Erfindungsgemäß wird dies durch die Merkmale des Patentanspruches 1 erreicht.

Dadurch kann eine Justiereinheit gebildet werden, welche aufgrund deren modularen Aufbau sehr einfach und flexibel einsetzbar ist, und welche durch die direkte Verbindung der einzelnen Linearjustiereinheiten sehr verwindungssteif und hochbelastbar ist.

Die Erfindung betrifft weiters eine Linearjustiereinheit gemäß dem Oberbegriff des Patentanspruches 7.

Es sind Linearjustiereinheiten bekannt, welche einen ersten Bauteil aufweisen, welcher gegenüber einem zweiten Bauteil linear verschiebbar sind. In dem zweiten Bauteil ist dabei eine Spindel drehbar gelagert, mittels derer der erste Bauteil verschiebbar ist. Nachteilig an diesen bekannten Ausführungen ist, dass diese sehr anfällig für Verschmutzungen sind. Zudem ist die offen zugängliche Spindel anfällig für mechanische Beschädigungen. Es sind Konstruktionen bekannt, welche eine genaue Form der Justage erlauben, jedoch konstruktiv nicht für die Aufnahme großer Lasten geeignet sind. Ebenso sind hoch belastbare Konstruktionen bekannt, welche jedoch keine genaue Justage erlauben.

Aufgabe der Erfindung ist es daher eine Linearjustiereinheit der vorstehend genannten Art anzugeben, mit welcher die genannten Nachteile vermieden werden können, welche unanfällig für Verschmutzungen und mechanische Beschädigungen ist, welche hochbelastbar ist, und welche den Einsatz in einer modular aufgebauten Justiereinheit unterstützt.

Erfindungsgemäß wird dies durch die Merkmale des Patentanspruches 1 erreicht.

Dadurch kann eine Linearjustiereinheit gebildet werden, welche unanfällig für Verschmutzungen und mechanische Beschädigungen ist. Die Spindel ist dabei von dem ersten und dem zweiten Bauteil vor Verschmutzung und mechanischer Beschädigung geschützt. Dadurch ist weiters eine kompakte Bauweise möglich, welche geeignet ist, hohe Kräfte aufzunehmen. Durch die Verbindungsmittelaufnahmen für lösbare Verbindungsmittel wird ein Einsatz mit modular aufgebauten erfindungsgemäßen Justiereinheiten unterstützt.

Die Unteransprüche, welche ebenso wie die Patentansprüche 1 und 7 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 die Einzelteile einer besonders bevorzugten Ausführungsform einer erfindungsgemäßen Linearjustiereinheit in einer ersten axonometrischen Explosionsdarstellung;
Fig. 2 eine Linearjustiereinheit gemäß Fig. 1 in zusammengebautem Zustand in einer ersten axonometrischen Ansicht;
Fig. 3 die Einzelteile gemäß Fig. 1 in einer zweiten axonometrischen Explosionsdarstellung;
Fig. 4 die Linearjustiereinheit gemäß Fig. 2 in einer zweiten axonometrischen Ansicht;
Fig. 5 und Fig. 6 drei Linearjustiereinheiten gemäß Fig. 2 vor dem Zusammenbau zu einer besonders bevorzugten Ausführungsform einer erfindungsgemäßen X-Y-Z-Justiereinheit in zwei unterschiedlichen axonometrischen Ansichten;
Fig. 7 und Fig. 8 zwei axonometrische Ansichten einer besonders bevorzugten Ausführungsform einer erfindungsgemäßen X-Y-Z-Justiereinheit.

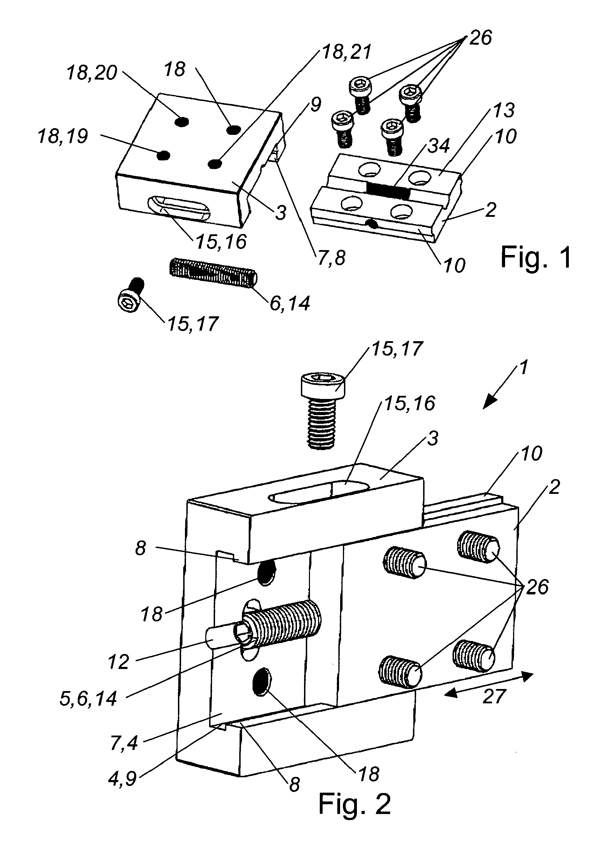

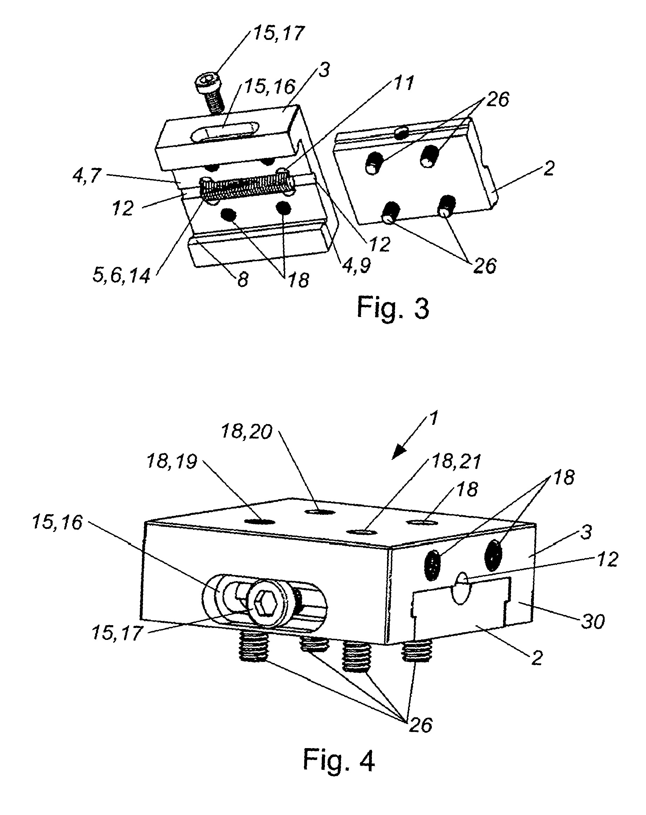

Die Fig. 1 bis 8 zeigen unter anderem wenigstens eine Linearjustiereinheit 1 mit einem ersten Bauteil 2 und einem zweiten Bauteil 3, wobei der zweite Bauteil 3 eine Linearführung 4 aufweist, und der erste Bauteil 2 innerhalb des zweiten Bauteils 3 linear geführt ist, wobei eine Einstelleinheit 5 umfassend eine Spindel 6 vorgesehen ist, und der erste Bauteil 2 gegenüber dem zweiten Bauteil 3 mittels der Einstelleinheit 5 verstellbar ist, wobei die Spindel 6 zwischen dem ersten Bauteil 2 und dem zweiten Bauteil 3 angeordnet ist, und dass die Spindel 6 im Betrieb von dem ersten Bauteil 2 und dem zweiten Bauteil 3 im Wesentlichen verdeckt ist.

Dadurch kann eine Linearjustiereinheit 1 gebildet werden, welche unanfällig für Verschmutzungen und mechanische Beschädigungen ist. Die Spindel 6 ist dabei von dem ersten und dem zweiten Bauteil 2, 3 vor Verschmutzung und mechanischer Beschädigung geschützt. Dadurch ist weiters eine kompakte Bauweise möglich, welche geeignet ist, hohe Kräfte aufzunehmen.

Erfindungsgemäße Linearjustiereinheiten 1 sind bevorzugt zur Aufnahme hoher Kräfte vorgesehen, und werden daher bevorzugt aus metallischen Werkstoffen, insbesondere umfassend Stahl, Titan, Wolfram, Nickel, etwa Neumonic, oder dergleiche, gebildet.

In dem zweiten Bauteil 3 ist eine Linearführung 4 zur linearen Führung des ersten Bauteils 2 ausgebildet. Die Linearführung 4 ist dabei derart ausgebildet, dass der erste Bauteil 2 innerhalb des zweiten Bauteils 3 geführt ist. Die Linearführung 4 weist dabei eine Aufnahme auf, welche im zweiten Bauteil 3 ausgebildet ist, und welche den ersten Bauteil 2 in wenigstens einer Ruhelage im Wesentlichen vollständig aufnimmt, wobei der erste Bauteil 2 wenigstens bereichsweise entsprechend gegengleich der Aufnahme im zweiten Bauteil 3 ausgebildet ist. Die Linearführung 4 ist bevorzugt über eine gesamte Längserstreckung des zweiten Bauteils 3 ausgebildet.

Die Aufnahme weist eine Form auf, welche eine lineare Führung des ersten Bauteils 2 innerhalb des zweiten Bauteils 3 gewährleistet. Der zweite Bauteil 3 weist daher rechtwinkelig zur Verstellrichtung einen im Wesentlichen konkaven Querschnitt auf, welcher bevorzugt derart ausgebildet ist, dass dieser den Querschnitt des ersten Bauteils 2 im Wesentlichen vollständig aufnimmt, wobei vorgesehen ist, dass der erste Bauteil 2 den zweiten Bauteil 3 überragt, um eine relative Verschiebbarkeit der beiden Bauteile 2, 3 zueinander zu gewährleisten, selbst wenn auf dem ersten Bauteil 2 eine Last montiert ist, welche den ersten Bauteil 2 überragt. Besonders bevorzugt ist dabei, wie bei der in den Fig. 1 bis 8 dargestellten bevorzugten Ausführungsform, vorgesehen, dass die Aufnahme als im Wesentlichen U-förmige Ausnehmung 7 ausgebildet ist, bzw. dass der zweite Bauteil 3 eine im Wesentlichen U-förmige Ausnehmung 7 zur Aufnahme des ersten Bauteils 2 aufweist. Der erste Bauteil 2 weist eine zu der Aufnahme im Wesentlichen gegengleiche Form auf. Dadurch kann erreicht werden, dass der erste Bauteil 2 im Wesentlichen über die gesamte gemeinsame Grundfläche der beiden Bauteile 2, 3 auf dem zweiten Bauteil 3, aufliegt, wodurch bei geringer Größe der beiden Bauteile 2, 3 hohe Kräfte aufgenommen werden können, da die lokale Flächenbelastung gering gehalten werden kann.

Bevorzugt ist vorgesehen, eine erfindungsgemäße Linearjustiereinheit 1 in unterschiedlichen Lagen einzusetzen, deshalb ist bevorzugt vorgesehen, dass der konkav ausgebildete zweite Bauteil 3 Hinterschneidungen aufweist, und der erste Bauteil 2 entsprechend gegengleiche Fortsätze 10. Dadurch kann die Linearjustiereinheit 1 in unterschiedlichen Lagen betrieben werden, ohne dass der erste Bauteil 2 unter der Wirkung der Schwerkraft von dem zweiten Bauteil 3 getrennt werden würde. Besonders bevorzugt ist hiebei vorgesehen, dass an den Schenkeln 8 der U-förmigen Ausnehmung 7 jeweils wenigstens eine Nut 9 angeordnet ist, wobei die U-förmige Ausnehmung 7 zusammen mit den Nuten 9 die Linearführung 4 bilden, sowie dass der erste Bauteil 2 im Wesentlichen gegengleich zu der U-förmigen Ausnehmung 7 ausgebildet ist, und den Nuten 9 im Wesentlichen gegengleiche Fortsätze 10 aufweist.

Eine erfindungsgemäße Linearjustiereinheit 1 weist wenigstens eine Einstelleinheit 5 auf, zum Verstellen des ersten Bauteils 2 gegenüber dem zweiten Bauteil 3. Diese Einstelleinheit 5 weist wenigstens eine Spindel 6 auf, welche wenigstens bereichsweise wenigsten einen Gewindegang aufweist, wobei auch gewindefreie Bereiche vorgesehen sein können. Es kann auch vorgesehen sein, dass die Spindel 6 ein mehrgängiges Gewinde aufweist. Bevorzugt ist die Spindel als Gewindestift 14 ausgebildet. Ein Gewindestift 14, ist dabei eine Spindel 6, welche über die volle Länge wenigstens einen Gewindegang aufweist, bzw. welche lediglich durch die ein Gewinde aufweisenden Bereiche gebildet ist, und frei weiterer Betätigungsmittel, wie etwa einem Schraubenkopf, einer Kurbel oder ähnlichem ist. An wenigstens einer Stirnseite weist die derart gebildete Spindel 6 eine Aufnahme, insbesondere einen Innensechskant, Innenvierkant, Kreuzschlitz, Torx, Potzidrive, Triwing oder dergleichen, für ein Verstellwerkzeug auf. Durch den Verzicht auf Kurbeln oder ähnliches kann die Linearjustiereinheit 1 besonders kompakt gehalten werden. Durch die innerhalb der Spindel 6 liegende Aufnahme für ein Verstellwerkzeug kann die Linearjustiereinheit 1 vor ungewollten Verstellungen bzw. Manipulationen geschützt werden.

Die Spindel 6 ist zwischen dem ersten und dem zweiten Bauteil 2, 3 gelagert, wobei insbesondere vorgesehen ist, dass die Spindel 6, bzw. die durch diese gebildete Einstelleinheit 5, innerhalb einer Spindelaufnahme 11 angeordnet ist. Die Spindel 6 ist dabei drehbar innerhalb der Spindelaufnahme 11 gelagert. Bevorzugt und wie in den Fig. 1 bis 3 dargestellt, vorgesehen, dass in der U-förmigen Ausnehmung 7 eine Spindelaufnahme 11 angeordnet ist, welche vorzugsweise wannenförmig bzw. in Form einer umseitig geschlossenen langlochartigen Vertiefung ausgebildet ist, welche geringfügig größer als die Außenabmessungen der Spindel 6 ist. Bevorzugt ist dabei vorgesehen, dass die Spindel 6 ohne zusätzliche Lagerung innerhalb der Spindelaufnahme 11 drehbar angeordnet ist, wobei jedoch auch vorgesehen sein kann, dass die Spindel 6 innerhalb der Spindelaufnahme 11, etwa mittels Kugellager oder Gleitlager drehbar gelagert ist. Um das Einführen eines Verstellwerkzeuges zu gewährleisten ist vorgesehen, dass die Spindelaufnahme 11 einen Eingangsbereich 12 in Form eines Durchbruches aufweist.

Mittels der Spindel 6 wird der erste Bauteil 2 gegenüber dem zweiten Bauteil 3 verstellt. Die Spindel 6 ist verschiebefest innerhalb des zweiten Bauteils 3 gelagert. Bevorzugt ist daher vorgesehen, dass eine, der U-förmigen Ausnehmung 7 zugewandte erste Fläche 13 des ersten Bauteils 2 wenigstens bereichsweise zum Eingriff der Spindel 6 ausgebildet ist. Die erste Fläche 13 kann etwa in Form eines wenigstens bereichsweise ausgebildeten Gewindes bzw. von Gewindeteilen 34, oder in Form einer Zahnstange ausgebildet sein. Besonders bevorzugt und wie etwa in Fig. 1 dargestellt ist vorgesehen, dass die erste Fläche 13 wenigstens bereichsweise gegengleich einem in der Spindelaufnahme 11 angeordneten Gewindestift 14 ausgebildet ist, daher Gewindeteile 34 eines entsprechenden Gewindes aufweist.

Erfindungsgemäß ist vorgesehen, dass die Spindel 6 im Betrieb von dem ersten Bauteil 2 und dem zweiten Bauteil 3 im Wesentlichen verdeckt ist. Um ein Freilegen der Spindel 6 während des Betriebs zu verhindern, ist bei der dargestellten bevorzugten Ausführungsform vorgesehen, dass die Linearjustiereinheit 1 Mittel 15 zur Limitierung der Verstellbarkeit aufweist. Bevorzugt ist hiebei vorgesehen, dass die Mittel 15 zur Limitierung der Verstellbarkeit wenigstens ein Langloch 16, mit Längserstreckung in Verstellrichtung 27 der Linearführung 4, und einen Stift 17 umfassen, welcher in das Langloch 16 eingreift. Dadurch kann eine einfache mechanische Limitierung der Verstellbarkeit erreicht werden, wobei unterschiedliche Ausgestaltungen vorgesehen sein, können. So kann etwa ein lediglich innerhalb der U-förmigen Ausnehmung 7 angeordnetes Langloch 16 vorgesehen sein, in welches ein Stift 17 eingreift, welche federkraftbetätigt ist oder, etwa mittels eines Schlüssels, in das Langloch 16 geschwenkt werden kann. Besonders bevorzugt ist vorgesehen, dass das Langloch 16 als Durchgangsöffnung in dem zweiten Bauteil 3 ausgebildet ist, etwa als Durchgangsöffnung im Bereich eines Schenkels 8 der U-förmigen Ausnehmung 7, und dass der Stift 17 als Schraube bzw. Bolzen ausgebildet ist, wodurch ein einfacher Aufbau und eine einfache Montage der Linearjustiereinheit 1 erreicht werden kann. Dadurch kann weiters eine Klemmung bzw. Hemmung der Verstellbarkeit der Linearjustiereinheit 1 erreicht werden, indem das Langloch, wie dargestellt eine Auflagefläche für einen Schraubenkopf aufweist, und die Schraube in dem Langloch 16 festgezogen wird, wobei der Schraubenkopf gegen die Auflagefläche gepresst wird.

Erfindungsgemäß ist vorgesehen aus einer vorgebbaren Anzahl miteinander verbundener erfindungsgemäßer Linearjustiereinheiten 1 Justiereinheiten 22, 23 zu bilden, welche eine Justage in einer vorgebbaren Anzahl an Dimensionen erlauben, wobei mit einer Dimension jeweils eine Verstellmöglichkeit entlang einer Verstellrichtung 27, 28, 29 einer Linearjustiereinheit 1, 31, 32, 33 bezeichnet wird. Besonders bevorzugt ist hiebei vorgesehen, dass eine zweidimensionale Justiereinheit 22 durch das unmittelbare Verbinden zweier erfindungsgemäßer Linearjustiereinheiten 1, 31, 32 gebildet ist, bzw. dass dreidimensionale Justiereinheiten 23 durch das unmittelbare Verbinden dreier erfindungsgemäßer Linearjustiereinheiten 1, 31, 32, 33 gebildet sind. Unmittelbar miteinander verbunden, ist dabei bevorzugt als ein Verbinden der einzelnen Linearjustiereinheiten 1 ohne die Notwendigkeit eines Adapters zu verstehen, wobei vorgesehen sein kann, zwischen den einzelnen Linearjustiereinheiten 1 etwa Dichtmittel, Schraubensicherungslack oder Dämpfungsmatten anzuordnen.

Bei der Bildung einer derartigen mehrdimensionalen Justiereinheit 22, 23 kann jede Art der Verbindung der einzelnen Linearjustiereinheiten 1, 31, 32, 33 vorgesehen sein. Besonders bevorzugt ist vorgesehen, dass die einzelnen Linearjustiereinheiten 1, 31, 32, 33 einer derartigen mehrdimensionalen Justiereinheit 22, 23 mittels lösbarer Verbindungsmittel 26, etwa mittels Schrauben oder mechanischen Schnellverschlüssen, miteinander verbunden sind. Hiebei ist vorgesehen, dass der erste und/oder der zweite Bauteil 2, 3 Verbindungsmittelaufnahmen 18 für lösbare Verbindungsmittel 26 aufweisen, welche bevorzugt als Durchgangsöffnungen ausgebildet sind, wobei vorgesehen sein kann, dass die Durchgangsöffnungen ein Innengewinde aufweisen. Die lösbaren Verbindungsmittel 26 sind bevorzugt als Schrauben ausgebildet, wobei vorgesehen ist, dass die Schrauben einen Schraubenkopf mit einer Aufnahme, insbesondere einen Innensechskant, Innenvierkant, Kreuzschlitz, Torx, Potzidrive, Triwing oder dergleichen, für ein Verstellwerkzeug aufweist. Besonders bevorzugt ist hiebei vorgesehen, dass die lösbaren Verbindungsmittel 26, der als Schraube ausgebildete Stift 17 und/oder der Gewindestift 14 identische Aufnahmen für ein Verstellwerkzeug aufweisen. Dadurch können sämtliche Einstellungen an einer Linearjustiereinheit 1 bzw. einer Justiereinheit 22, 23 mit nur einem einzigen Verstellwerkzeug vorgenommen werden.

Die Verbindungsmittelaufnahmen 18 sind bevorzugt derart angeordnet, dass diese ein adapterloses Verbinden eines ersten Bauteils 2 mit einem zweiten Bauteil 3 erlauben, wobei besonders bevorzugt vorgesehen ist, dass darüber hinaus die adapterlose Verbindung in vorgebbaren Winkeln der Verstellrichtungen 27, 28, 29 der einzelnen Linearjustiereinheiten 1, 31, 32, 33 zueinander vorgesehen sein kann. Dies wird dadurch erreicht, dass der erste Bauteil 2 und der zweite Bauteil 3 jeweils wenigstens drei Verbindungsmittelaufnahmen 18 aufweisen, wobei eine erste Verbindungsmittelaufnahme 18, 19 zu deren jeweils nächst benachbarten zweiten Verbindungsmittelaufnahme 18, 20 und dritten Verbindungsmittelaufnahmen 18, 21 einen vorgebbaren konstanten Abstand aufweist. Dadurch kann eine Anordnung der Verbindungsmittelaufnahmen 18, 19, 20, 21 erreicht werden, welche eine Anordnung eines zweiten Bauteils 3 einer zweiten Linearjustiereinheit 1, 32 auf einem ersten Bauteil 2 einer ersten Linearjustiereinheit 1, 31 ermöglicht, wobei die zweite Linearjustiereinheit 1, 32 gegenüber der ersten Linearjustiereinheit 1, 31 verdreht angeordnet werden kann, wobei das Maß der Verdrehung der Verstellrichtung 27 der ersten Linearjustiereinheit 1, 31 zur Verstellrichtung 28 der zweiten Linearjustiereinheit 1, 32 durch die Anzahl der Verbindungsmittelaufnahmen 18 vorgegeben werden kann. Bei entsprechend der vorstehenden Ausführungen angeordneten Verbindungsmittelaufnahmen 18 kann die erste zur zweiten Linearjustiereinheit 1, 31, 32, bezogen auf deren Verstellrichtungen 27, 28, in Schritten von 360° durch die Anzahl der Verbindungsmittelaufnahmen 18 zueinander angeordnet werden. Daher etwa bei vier Verbindungsmittelaufnahmen 18: 360°/4 = 90°.

In diesem Zusammenhang ist in Weiterführung der Erfindung vorgesehen sein, dass der erste Bauteil 2 und der zweite Bauteil 3 jeweils die selbe Anzahl an Verbindungsmittelaufnahmen 18 aufweisen, und dass die im ersten Bauteil 2 angeordneten Verbindungsmittelaufnahmen 18, und die im zweiten Bauteil 3 angeordneten Verbindungsmittelaufnahmen 18 in wenigstens einer Stellung bzw. Position des ersten Bauteils 2 zum zweiten Bauteil 3 zueinander fluchtend angeordnet sind. Dadurch können die lösbaren Verbindungsmittel 26, welche in den Verbindungsmittelaufnahmen 18 in einem der beiden Bauteile 2, 3 angeordnet sind, durch die Verbindungsmittelaufnahmen 18 in dem jeweils anderen Bauteil 3, 2 hindurch betätigt werden, indem ein Verstellwerkzeug, etwa ein Schraubendreher oder ein sog. Inbusschlüssel durch eine Verbindungsmittelaufnahme hindurch in ein lösbares Verbindungsmittel 26, etwa eine Schraube mit einem Innensechskant, eingreift. Dadurch können besonders einfach Veränderungen an einer Justiereinheit 22, 23 im wenigstens teilweise montierten Zustand vorgenommen werden, ohne dass hiezu die vollständige Demontage der Justiereinheit 22, 23 notwendig wäre. Besonders bevorzugt ist hiebei vorgesehen, dass bei der Stellung bzw. Position, bei welcher die Verbindungsmittelaufnahmen des ersten Bauteils 2 zu denen des zweiten Bauteils 3 fluchtend angeordnet sind, wenigstens zwei der Stirnseiten des ersten Bauteils 2 und des zweiten Bauteils 3 fluchtend, bzw. in einer Ebene, angeordnet sind.

Um weiters auch eine Verstellung normal zu einer, aus erster und zweiter Verstellrichtung 27, 28 gebildeten Ebene zu ermöglichen, ist bevorzugte vorgesehen, dass an wenigstens einer Stirnseite 30 des ersten Bauteils 2 und/oder des zweiten Bauteils 3 wenigstens zwei Verbindungsmittelaufnahmen 18 angeordnet sind, welche zueinander den konstanten Abstand aufweisen.

Besonders bevorzugt ist vorgesehen eine zweidimensionale Justiereinheit 22 als sog. X-Y-Justiereinheit 24 auszubilden, wobei eine erste erfindungsgemäße Linearjustiereinheit 1, 31 mit einer zweiten erfindungsgemäßen Linearjustiereinheit 1, 32 mittels lösbarer Verbindungsmittel 26 unmittelbar verbunden ist, wobei die Verstellrichtung 27 der ersten Linearjustiereinheit 1, 31 im Wesentlichen normal auf die Verstellrichtung 28 der zweiten Linearjustiereinheit 1, 32 angeordnet ist. Dadurch kann eine sehr kompakte hochbelastbare X-Y-Justiereinheit gebildet werden, welche unempfindlich gegen Verschmutzung und mechanische Beschädigungen ist, und ohne zusätzliche Adapter gebildet werden kann.

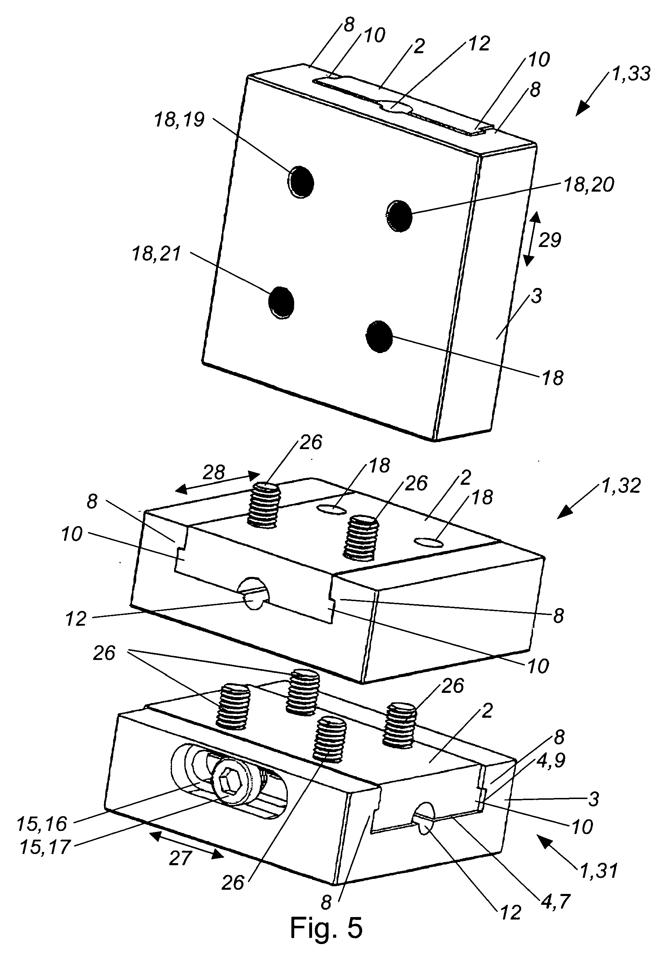

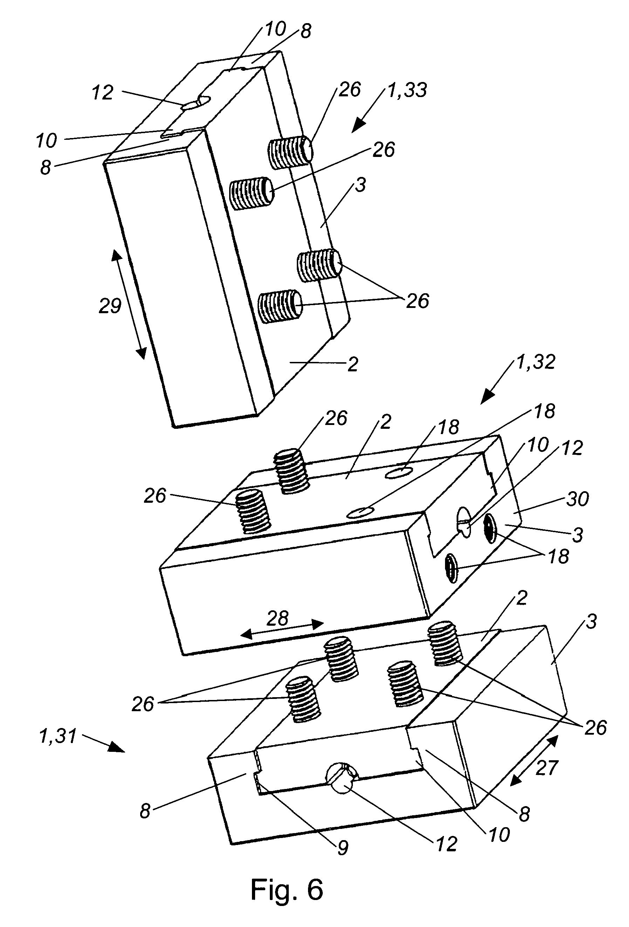

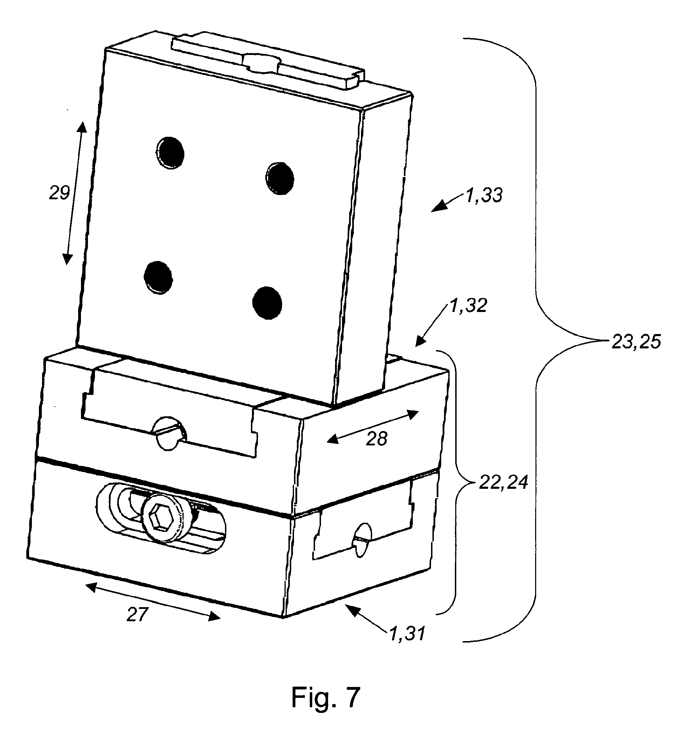

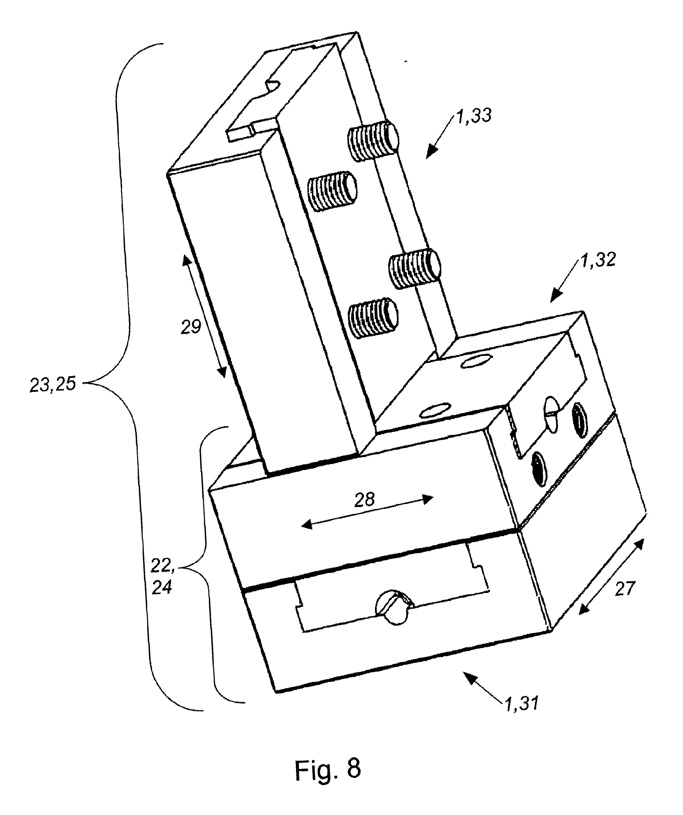

Weiters ist besonders bevorzugt vorgesehen eine dreidimensionale Justiereinheit 23 als sog. X-Y-Z-Justiereinheit 25 auszubilden, wobei eine dritte erfindungsgemäße Linearjustiereinheit 1, 33 mittels lösbarer Verbindungsmittel 26 mit einer vorstehend beschriebenen X-Y-Justiereinheit 24 unmittelbar verbunden ist, wobei die Verstellrichtung 29 der dritten Linearjustiereinheit 1, 33 im Wesentlichen normal auf die Verstellrichtung 27 der ersten Linearjustiereinheit 1, 31 und der Verstellrichtung 28 der zweiten Linearjustiereinheit 1, 32 angeordnet ist, wodurch eine sehr kompakte hochbelastbare X-Y-Z-Justiereinheit gebildet werden kann, welche unempfindlich gegen Verschmutzung und mechanische Beschädigungen ist, und ohne zusätzliche Adapter gebildet werden kann. X, Y und Z bezeichnen dabei in an sich bekannter Weise die Achsen eines kartesischen Koordinatensystems. Die Fig. 7 und 8 zeigen jeweils eine derartige X-Y-Z-Justiereinheit 25, wobei auch die X-Y-Justiereinheit 24 erkennbar ist, welche als Basis für die dritte Linearjustiereinheit 1, 33 dient. Gut zu erkennen ist dabei, dass die einzelnen Linearjustiereinheiten 1, 31, 32, 33 unmittelbar bzw. adapterfrei miteinander verbunden sind. Die Fig. 5 und 6 zeigen die X-Y-Z-Justiereinheit 25 unmittelbar vor dem Zusammenbau.

Bei den beschriebenen Justiereinheiten, welche aus zwei, drei oder mehreren Linearjustiereinheiten (1, 31, 32, 33) gebildet sind, bzw. solche umfassen, ist bevorzugt vorgesehen, dass die Linearjustiereinheiten (1, 31, 32, 33) als jeweils gleichartige, insbesondere identische, Linearjustiereinheiten (1, 31, 32, 33) ausgebildet sind. Daher weisen die jeweils verwendeten Linearjustiereinheiten (1, 31, 32, 33) jeweils identische Abmessungen und an jeweils identischen Positionen angeordnete Verbindungsmittelaufnahmen (18) auf, wie dies etwa auch aus den Fig. 5 bis 8 hervorgeht.

Dadurch können mit nur einer Ausführungsform derartiger Linearjustiereinheiten (1, 31, 32, 33) unterschiedliche Justiereinheiten gebildet werden, ohne dass hiezu weitere Änderungen bzw. Anpassungen an einer der Linearjustiereinheiten (1, 31, 32, 33) notwendig wäre.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Justiereinheit, **gekennzeichnet durch** zwei eine zweidimensionale Justiereinheit (22) ausbildende und unmittelbar miteinander verbundene Linearjustiereinheiten (1).

2. Justiereinheit nach Anspruch 1, **gekennzeichnet durch** drei eine dreidimensionale Justiereinheit (23) ausbildende und unmittelbar miteinander verbundene Linearjustiereinheiten (1).

3. Justiereinheit nach Anspruch 1, **dadurch gekennzeichnet, dass** eine erste Linearjustiereinheit (1, 31) mit einer zweiten Linearjustiereinheit (1, 32) mittels lösbarer Verbindungsmittel (26) unmittelbar verbunden sind, und dass die Verstellrichtung (27) der ersten Linearjustiereinheit (1, 31) unter Ausbildung einer X-Y-Justiereinheit (24) im Wesentlichen normal auf die Verstellrichtung (28) der zweiten Linearjustiereinheit (1, 32) angeordnet ist.

4. Justiereinheit nach Anspruch 3, **dadurch gekennzeichnet, dass** eine dritte Linearjustiereinheit (1, 33) mittels lösbarer Verbindungsmittel (26) mit der X-Y-Justiereinheit (24) unmittelbar verbunden ist, wobei die Verstellrichtung (29) der dritten Linearjustiereinheit (1, 33) unter Ausbildung einer X-Y-Z-Justiereinheit (25) im Wesentlichen normal auf die Verstellrichtung (27) der ersten Linearjustiereinheit (1, 31) und der Verstellrichtung (28) der zweiten Linearjustiereinheit (1, 32) angeordnet ist.

5. Justiereinheit nach einem der Ansprüche 1 bis 4, **dadurch gekennzeichnet, dass** die Linearjustiereinheiten (1, 31, 32, 33) als jeweils gleichartige, insbesondere identische, Linearjustiereinheiten (1, 31, 32, 33) ausgebildet sind.

6. Justiereinheit nach einem der Ansprüche 1 bis 5, **dadurch gekennzeichnet, dass** die Linearjustiereinheiten (1, 31, 32, 33) jeweils ein erstes Bauteil (2) und ein zweites Bauteil (3) umfassen, dass der zweite Bauteil (3) eine Linearführung (4) aufweist, und der erste Bauteil (2) innerhalb des zweiten Bauteils (3) linear geführt ist, dass der erste Bauteil (2) gegenüber dem zweiten Bauteil (3) mittels einer eine Spindel (6) umfassenden Einstelleinheit (5) verstellbar ist, dass die Spindel (6) zwischen dem ersten Bauteil (2) und dem zweiten Bauteil (3) angeordnet ist, und dass die Spindel (6) im Betrieb von dem ersten Bauteil (2) und dem zweiten Bauteil (3) im Wesentlichen verdeckt ist.

7. Linearjustiereinheit (1) für eine Justiereinheit nach einem der Ansprüche 1 bis 5 mit einem ersten Bauteil (2) und einem zweiten Bauteil (3), wobei der zweite Bauteil (3) eine Linearführung (4) aufweist, und der erste Bauteil (2) innerhalb des zweiten Bauteils (3) linear geführt ist, wobei eine Einstelleinheit (5) umfassend eine Spindel (6) vorgesehen ist, und der erste Bauteil (2) gegenüber dem zweiten Bauteil (3) mittels der Einstelleinheit (5) verstellbar ist, wobei die Spindel (6) zwischen dem ersten Bauteil (2) und dem zweiten Bauteil (3) angeordnet ist, und die Spindel (6) im Betrieb von dem ersten Bauteil (2) und dem zweiten Bauteil (3) im Wesentlichen verdeckt ist, **dadurch gekennzeichnet, dass** der erste und/oder der zweite Bauteil (2, 3) Verbindungsmittelaufnahmen (18) für lösbare Verbindungsmittel (26) aufweisen.

8. Linearjustiereinheit (1) nach Anspruch 7, **dadurch gekennzeichnet, dass** der zweite Bauteil (3) eine im Wesentlichen U-förmige Ausnehmung (7) zur Aufnahme des ersten Bauteils (2) aufweist, dass an den Schenkeln (8) der U-förmigen Ausnehmung (7) jeweils wenigstens eine Nut (9) angeordnet ist, wobei die U-förmige Ausnehmung (7) zusammen mit den Nuten (9) die Linearführung (4) bilden, und dass der erste Bauteil (2) im Wesentlichen gegengleich zu der U-förmigen Ausnehmung (7) ausgebildet ist, und den Nuten (9) im Wesentlichen gegengleiche Fortsätze (10) aufweist.

9. Linearjustiereinheit (1) nach Anspruch 8, **dadurch gekennzeichnet, dass** in der U-förmigen Ausnehmung (7) eine, vorzugsweise wannenförmige, Spindelaufnahme (11) angeordnet ist, welche einen Eingangsbereich (12) zum Einführen eines Verstellwerkzeuges aufweist, und dass vorzugsweise eine, der U-förmigen Ausnehmung (7) zugewandte erste Fläche (13) des ersten Bauteils (2) wenigstens bereichsweise zum Eingriff der Spindel (6) ausgebildet ist.

10. Linearjustiereinheit (1) nach Anspruch 9, **dadurch gekennzeichnet, dass** die gesamte Einstelleinheit (5) innerhalb der Spindelaufnahme (11) angeordnet ist.

11. Linearjustiereinheit (1) nach einem der Ansprüche 7 bis 10, **dadurch gekennzeichnet, dass** die Spindel (6) als Gewindestift (14) ausgebildet ist, und dass vorzugsweise die erste Fläche (13) wenigstens bereichsweise gegengleich einem in der Spindelaufnahme (11) angeordneten Gewindestift (14) ausgebildet ist.

12. Linearjustiereinheit (1) nach einem der Ansprüche 7 bis 11, **dadurch gekennzeichnet, dass** die Linearjustiereinheit (1) Mittel (15) zur Limitierung der Verstellbarkeit aufweist.

13. Linearjustiereinheit (1) nach Anspruch 12, **dadurch gekennzeichnet, dass** die Mittel (15) zur Limitierung der Verstellbarkeit wenigstens ein Langloch (16), mit Längserstreckung in Verstellrichtung (27) der Linearführung (4), und einen Stift (17) umfassen, welcher in das Langloch (16) eingreift, und dass vorzugsweise das Langloch (16) als Durchgangsöffnung in dem zweiten Bauteil (3) ausgebildet ist.

14. Linearjustiereinheit (1) nach einem der Ansprüche 7 bis 13, **dadurch gekennzeichnet, dass** der erste Bauteil (2) und der zweite Bauteil (3) jeweils wenigstens drei Verbindungsmittelaufnahmen (18) aufweisen, wobei eine erste Verbindungsmittelaufnahme (18, 19) zu deren jeweils nächsten benachbarten zweiten und dritten Verbindungsmittelaufnahmen (18, 20, 21) einen vorgebbaren konstanten Abstand aufweist.

15. Linearjustiereinheit (1) nach einem der Ansprüche 7 bis 14, **dadurch gekennzeichnet, dass** an wenigstens einer Stirnseite (30) des ersten Bauteils (2) und/oder des zweiten Bauteils (3) wenigstens zwei Verbindungsmittelaufnahmen (18) angeordnet sind, welche zueinander den konstanten Abstand aufweisen.
